# EUROPÄISCHE PATENTANMELDUNG

(11) **EP 1 942 458 A1**
(43) Veröffentlichungstag der Anmeldung: **09.07.2008**
(21) Anmeldenummer: 06025941.3
(22) Anmeldetag: 14.12.2006
(51) Int. Cl.: G06Q 40/00

(54) **Zustellungssystem**

(71) Anmelder: eBankingServices Nord GmbH, 24114 Kiel (DE)
(72) Erfinder: Hammer, Asmus, 24159 Kiel (DE)
(74) Vertreter: Schwöbel, Karl T.

(57) **Zusammenfassung**

Zustellungssystem für die Zustellung von Dokumenten zwischen Teilnehmern, sowie Verfahren zur Zustellung von Dokumenten mittels eines Zustellsystems.

## Beschreibung

Die Erfindung betrifft ein Zustellungssystem für die Zustellung von Dokumenten zwischen Teilnehmern, sowie ein Verfahren zur Zustellung von Dokumenten mittels eines Zustellsystems.

Hard- und Softwareprodukte ermöglichen es privaten Kontoinhabern und Unternehmen per so-genanntem electronic Banking Zahlungsverkehr und Kontoführung auf elektronischem Wege auszuführen. Bekannte Systeme für das electronic Banking sind auf die Ausführung von Vorgängen des klassischen Bankgeschäfts beschränkt. Periphere Vorgänge, welche mit den Bankgeschäften im Zusammenhang stehen, wie die Zustellung von Dokumenten werden getrennt von dem electronic Banking System durchgeführt. Es ist ein Nachteil, dass diese Zustellung von Dokumenten nicht in gleicher Weise gegen unberechtigten Zugriff sicherbar ist, wie die Kontoführung selbst.

Es ist daher eine Aufgabe der vorliegenden Erfindung, ein Zustellungssystem zur Verfügung zu stellen, das diesen Nachteil nicht aufweist.

Die Aufgabe wird gelöst durch ein Zustellungssystem für die Zustellung von Dokumenten von einem ersten Teilnehmer an einen zweiten Teilnehmer, dadurch gekennzeichnet, dass das Zustellungssystem aufweist:
- eine Datenbank, in welcher eine Mehrzahl von Identifikationsdatensätzen abgelegt ist, wobei jeder Identifikationsdatensatz mindestens ein Identifikationsmerkmal umfasst,
- eine Eingangsschnittstelle, welche für die Annahme der Dokumente von dem ersten Teilnehmer vorgesehen ist, wobei jedem Dokument mindestens ein erstes Identifikationsmerkmal zugeordnet ist, welches den zweiten Teilnehmer als Adressaten identifiziert,
- ein Zuordnungsmittel, welches den Dokumenten gegebenenfalls mindestens ein zweites ldentifikationsmerkmal des zweiten Teilnehmers zuordnet und
- eine Ausgangsschnittstelle, über welche die Dokumente dem zweiten Teilnehmer zustellbar sind.

Ein Dokument im Sinne dieser Erfindung ist eine beliebige Mitteilung, insbesondere in schriftlicher Form und insbesondere auch in elektronischer, digitalisierter Form. Dokumente sind beispielsweise Rechnungen, Bestellungen, Auftragsbestätigungen, Lieferscheine, Zahlungsavise oder vergleichbare Mitteilungen. Unter einem Teilnehmer im Sinne der Erfindung ist jeder beliebige Absender und/oder Adressat von Dokumenten zu verstehen, soweit diese mittels des erfindungsgemäßen Zustellungssystems zugestellt werden. Vorzugsweise weist die Datenbank mindestens einen Datensatz je Adressaten, besonders bevorzugt mindestens einen Datensatz je Teilnehmer auf. Das erste Identifikationsmerkmal beinhaltet insbesondere Daten, welche die Teilnehmer, insbesondere den zweiten Teilnehmer, betreffen, wie beispielsweise ein Name, eine Postanschrift, eine Adresse für elektronische Nachrichten oder eine Kundennummer.

Ein von dem ersten Teilnehmer über die erste Schnittstelle angenommenes Dokument ist mindestens durch das erste Identifikationsmerkmal einem der Identifikationsdatensätze zuzuordnen. Das Zuordnungsmittel ordnet dem Dokument gegebenenfalls das zweite Identifikationsmerkmal zu, das heißt, sofern das zweite Identifikationsmerkmal in dem Identifikationsdatensatz enthalten ist. Die Zustellung des Dokuments an den zweiten Teilnehmer erfolgt vorzugsweise auf der Basis des zweiten Identifikationsmerkmals. Der Fachmann erkennt, dass das zweite Identifikationsmerkmal, sofern es nicht in dem Identifikationsdatensatz enthalten ist, auch durch den zweiten Teilnehmer vor der Zustellung erfolgen.

Es ist ein Vorteil der Erfindung, dass der erste Teilnehmer keine Kenntnis des zweiten Identifikationsmerkmals benötigt und dass es nicht durch ihn übermittelt wird, was die Sicherheit bei der Zustellung erhöht, insbesondere bei Übermittlungen über elektronische und/oder öffentliche Netzwerke, wie beispielsweise das Internet.

In einer bevorzugten Ausführungsform ist das zweite Identifikationsmerkmal geeignet, ein elektronisch verwaltbares Bankkonto des zweiten Teilnehmers zu identifizieren. Das Bankkonto wird insbesondere mittels einer Kontonummer, einer Bankleitzahl, bzw. einer internationalen Bankkontonummer (international bank account number, IBAN) identifiziert. Vorteilhafterweise besteht die Möglichkeit, bestehende Komponenten auf Seiten des zweiten Teilnehmers und/oder des ersten Teilnehmers zu nutzen, mit welchen diese Ihre Bankkonten verwalten, insbesondere eine auf einem Computer beim Teilnehmer verfügbare Software für electronic Banking, wie beispielsweise die Softwareprodukte StarMoney oder S-Firm.

Vorzugsweise weist die Ausgangsschnittstelle einen Speicherort auf, wobei die Dokumente an dem Speicherort zur Abholung durch den zweiten Teilnehmer bereitstellbar sind. Insbesondere sind die Dokumente in elektronischer Form auf einem Speichermedium hinterlegt, welches durch den zweiten Teilnehmer über ein Netzwerk zugänglich ist, beispielsweise mittels einer Einwahlverbindung oder über ein öffentliches Netz. Besonders bevorzugt ist der Speicherort durch eine Legitimationsprüfung gegen unbefugten Zugriff geschützt, wobei ganz besonders bevorzugt eine Verbindung zwischen der Legitimationsprüfung und einem elektronisch verwaltbaren Bankkonto des zweiten Teilnehmers über ein elektronisches Netzwerk herstellbar ist und dabei insbesondere mittels Verfahren zur Legitimation für elektronische Bankgeschäfte ein Zugang der Legitimationsprüfung auf das Bankkonto herstellbar ist. Verfahren zur Legitimation im Sinne der Ausführungsform sind grundsätzlich alle denkbaren Sicherungsverfahren für das electronic Banking, wie beispielsweise die Verwendung eines Passworts, einer persönlichen Identifikationsnummer (PIN), gegebenenfalls in Verbindung mit einer Transaktionsnummer (TAN), oder Homebanking Computer Interface (HBCI), ein offener Standard für den Bereich electronic Banking und Kundenselbstbedienung, der von verschiedenen Bankengruppen in Deutschland entwickelt und vom Zentralen Kreditausschuss (ZKA) beschlossen wurde. HBCI definiert Übertragungsprotokolle, Nachrichtenformate und Sicherheitsverfahren. Vorteilhafterweise ist der Zugriff auf das Dokument so nur dem Personenkreis ermöglicht, der auch zum Zugriff auf das Bankkonto hat, welches durch das zweite Identifikationsmerkmal referenziert ist. Die Legitimationsprüfung ist vorteilhafterweise unabhängig davon, über welches der bekannten Verfahren ein Zugriff auf das referenzierte Konto erfolgt. Sofern der Zugriff erfolgreich ist, ist auch die Legitimationsprüfung bestanden. Besonders vorteilhaft ist es, wenn ein Bankkunde eine Software für electronic Banking nutzt oder auf ein Rechenzentrum für das electronic Banking zugreift, da diese ohnehin für den Zugriff auf das Bankkonto vorgesehen sind.

Vorzugsweise ist eine erste Teilnehmerverbindung zwischen dem ersten Teilnehmer und der Eingangsschnittstelle über ein elektronisches Netzwerk herstellbar und/oder eine zweite Teilnehmerverbindung zwischen dem zweiten Teilnehmer und der Ausgangsschnittstelle über ein elektronisches Netzwerk herstellbar, wobei die Dokumente über die erste Teilnehmerverbindung und/oder über die zweite Teilnehmerverbindung zustellbar sind.

In einer bevorzugten Ausführungsform weist das Zustellungssystem eine Informationsschnittstelle auf, über welche abfragbar ist, ob ein Dokument über das Zustellungssystem zustellbar ist. Der erste Teilnehmer, welcher ein Dokument an einen Adressaten versenden möchte, kann vorteilhafterweise über die Informationsschnittstelle abfragen, ob eine Zustellung möglich ist, das heißt, ob für den Adressaten ein Identifikationsdatensatz besteht. Vorzugsweise ist über eine Informationsschnittstelle eine Mehrzahl von Identifikationsmerkmalen eingebbar, wobei zu jedem Identifikationsmerkmal eine Information abrufbar ist, ob ein Teilnehmer mittels des ldentifikationsmerkmals in der Datenbank identifizierbar ist. Die Ausführungsform ist besonders vorteilhaft für einen Firmenkunden nutzbar, welcher an eine große Anzahl von Adressaten Dokumente verschickt. Beispielhaft seien hier öffentliche Versorger oder Dienstleistungsanbieter genannt, welche regelmäßig Rechnungen an eine große Anzahl von Kunden zustellen. Durch eine Abfrage der Informationsschnittstelle erhält der erste Teilnehmer eine Rückmeldung, welchen seiner Kunden Rechnungen oder andere Dokumente über das Zustellsystem zustellbar sind. Sensible Daten der in der Datenbank verzeichneten Teilnehmer werden dabei vorteilhafterweise nicht herausgegeben. Es ist ein weiterer Vorteil für den Absender einer großen Anzahl von Dokumenten, dass fehlende Informationen aus der Datenbank hinzufügbar sind. Beispielsweise ist häufig eine Adresse für elektronische Zustellung (E-Mail Adresse) der Kunden nicht bekannt, oder es liegt keine Erlaubnis des Kunden für die elektronische Zustellung vor, insbesondere bei Rechnungen. Die Teilnehmer, welche beispielsweise mit mindestens einem Identifikationsdatensatz in der Datenbank verzeichnet sind, haben ihre Erlaubnis zur Zustellung von Dokumenten über das System bereits durch ihre Teilnahme dokumentiert, so dass der Absender vorteilhafterweise auf die Einholung einer individuellen Erlaubnis jedes Kunden verzichten kann.

Ein weiterer Gegenstand der Erfindung betrifft ein Verfahren zur Zustellung von Dokumenten mittels eines Zustellsystems, insbesondere nach der vorliegenden Erfindung, wobei gemäß dem Verfahren
- eine Datenbank bereitgestellt wird, in welcher eine Mehrzahl von Identifikationsdatensätzen verwaltet wird, wobei jeder Identifikationsdatensatz mindestens ein erstes Identifikationsmerkmal umfasst;
- wobei mindestens ein Dokument von einem ersten Teilnehmer empfangen wird, welches zur Zustellung an einen zweiten Teilnehmer vorgesehen ist;
- wobei der zweite Teilnehmer anhand des ersten Identifikationsmerkmals, welches dem mindestens einen Dokument zugeordnet ist, als Adressat identifiziert wird;
- wobei dem mindestens einen Dokument gegebenenfalls mindestens ein weiteres Identifikationsmerkmals des zweiten Teilnehmers zugeordnet wird;
- und wobei das mindestens eine Dokument dem zweiten Teilnehmer zur Abholung bereitgestellt wird, insbesondere zum Abruf über ein elektronisches Netzwerk.

Es ist ein Vorteil des erfindungsgemäßen Verfahrens, dass das zweite Identifikationsmerkmal nicht durch mit übermittelt wird. Das Zustellungsverfahrens ist dadurch sicherer vor unbefugtem Zugriff, insbesondere bei Übermittlungen über elektronische und/oder öffentliche Netzwerke, wie beispielsweise das Internet. Vorzugsweise wird die Legitimation des zweiten Teilnehmers geprüft, wobei die Prüfung der Legitimation in einer besonders bevorzugten Ausführungsform folgende Schritte umfasst:
- Herstellen einer Verbindung zu einem elektronisch verwaltbaren Bankkonto des zweiten Teilnehmers;
- Zugriff auf das Bankkonto des zweiten Teilnehmers mittels Verfahren zur Legitimation für elektronische Bankgeschäfte.

Bei dem Zugriff auf das Bankkonto wird insbesondere überprüft, ob der zweite Teilnehmer die Berechtigung hat, auf das Bankkonto zuzugreifen. Das eigentlich zuzustellende Dokument, welches der zweite Teilnehmer empfangen möchte ist dabei völlig unabhängig von dem Bankkonto oder der kontoführenden Bank in einem Speicher des erfindungsgemäßen Zustellungssystems hinterlegt. Das Ergebnis des Zugriffs wird vorzugsweise temporär gespeichert, also beispielsweise für die Dauer einer Sitzung, während der der zweite Teilnehmer das Zustellungsverfahren bzw. das Zustellungssystem nutzt. Abhängig vom Ergebnis des Zugriffs auf das Bankkonto wird der Zugriff auf die durch das Bankkonto referenzierten Dokumente ermöglicht. Das mindestens eine Dokument wird dem zweiten Teilnehmer vorzugsweise nur dann zugänglich gemacht wird, wenn der Zugriff auf das Bankkonto erfolgreich ist. Der Zugriff auf die Dokumente erfolgt vorteilhafterweise bis auf den einmaligen Zugriff je Sitzung unabhängig von der kontoführenden Bank und kann so auch unabhängig von den für den Zugriff genutzten electronic Banking Anwendungen erfolgen.

Die Erfindung wird nachfolgend anhand einer Figur näher beschrieben. Die Ausführungen beziehen sich sowohl auf das erfindungsgemäße Zustellungssystem, als auch auf das erfindungsgemäße Verfahren zur Zustellung von Dokumenten. Die Ausführungen sind beispielhaft und schränken den allgemeinen Erfindungsgedanken nicht ein.

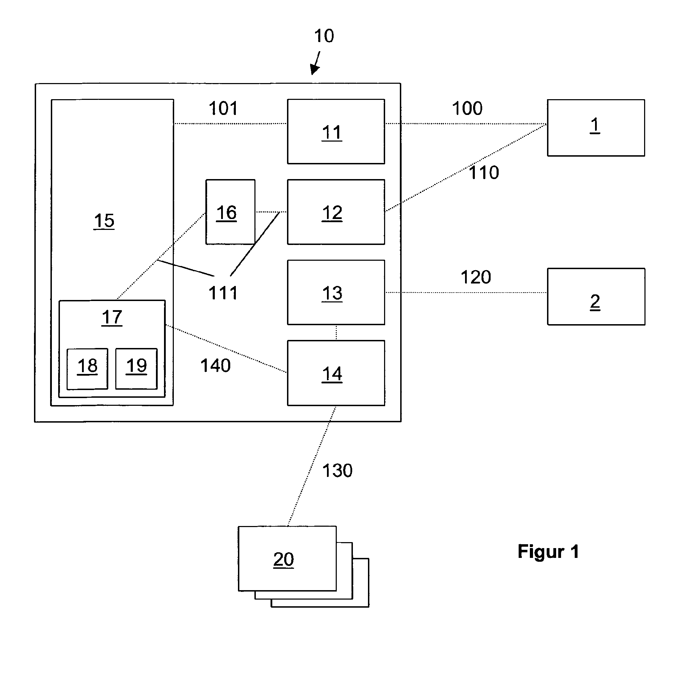

**Figur 1** zeigt eine schematische Darstellung einer Ausführungsform des erfindungsgemäßen Zustellungssystems.

In der **Figur 1** ist das erfindungsgemäße Zustellungssystem 10 in einer bevorzugten Ausführungsform dargestellt. Das Zustellungssystem 10 weist eine Datenbank 15 auf, die beispielsweise auf einem Massenspeichermedium einer Zentralrechneranlage gespeichert ist. Die Datenbank 15 umfasst eine Mehrzahl von Identifikationsdatensätzen 17, wobei jeder Identifikationsdatensatz 17 einem Teilnehmer 2 zugeordnet ist. Der Teilnehmer 2 ist in der Regel eine beliebige natürliche oder juristische Person, welcher über das erfindungsgemäße Zustellungssystem Dokumente zustellbar sind. Beispielsweise handelt es sich bei dem zweiten Teilnehmer 2 um einen Bankkunden, der sein Bankkonto 20 mittels electronic Banking verwaltet, zum Beispiel mit Hilfe einer Anwendersoftware auf seinem Computer. Bei der Anwendersoftware könnte beispielsweise eine Abfrage an den Nutzer implementiert sein, ob dieser als Teilnehmer des erfindungsgemäßen Zustellungssystems Dokumente darüber zugestellt bekommen möchte. Zu jedem Nutzer der Anwendersoftware, der sich bei dem Zustellungssystem anmeldet, wird dementsprechend ein Identifikationsdatensatz 17 in der Datenbank 15 angelegt. Nach der erfolgten Anmeldung kann der zweiten Teilnehmer 2 Dokumente über das Zustellsystem 10 zugestellt bekommen.

Jeder Identifikationsdatensatz umfasst mindestens zwei Identifikationsmerkmale 18, 19. Das erste Identifikationsmerkmal 18 identifizierte einen Adressaten, im dargestellten Beispiel den zweiten Teilnehmer 2. Es kann sich dabei um seinen Namen mit Anschrift oder beispielsweise um eine Kundennummer handeln. Mit dem zweiten Identifikationsmerkmal 19 wird das Bankkonto 20 des zweiten Teilnehmers 2 referenziert, beispielsweise mittels Bankleitzahl bzw. Swift-Code und Kontonummer, oder IBAN. Weitere Informationen zu dem zweiten Teilnehmer 2 können in dem Identifikationsdatensatz 17 enthalten sein.

Der Fachmann erkennt, dass zur Administration und zur Nutzung in der beschriebenen Weise, das Zustellungssystem zumindest einen Rechner (nicht dargestellt) aufweist, welcher die beschriebenen Vorgänge steuert.

Das Zustellungssystem 10 weist eine Mehrzahl von Schnittstellen 11, 12, 13, 14 auf, über welche Verbindungen 100, 110, 120, und 130 herstellbar sind. Die Verbindungen werden vorzugsweise über elektronische, öffentliche oder nichtöffentliche Netzwerke hergestellt. Es ist jedoch nicht ausgeschlossen, dass einzelne Verbindungen nicht netzwerkbasiert sind.

Die Informationsschnittstelle 11 erlaubt einem ersten Teilnehmer 1 die Herstellung der Verbindung 100. Über die Informationsschnittstelle 11 kann der erste Teilnehmer 1, Informationen über die in der Datenbank 15 gespeicherten Datensätze 17 erhalten. Dabei greift die Informationsschnittstelle 15 über eine interne Verbindung 101 auf die Datenbank 15 zu und stellt dem ersten Teilnehmer 1 die gewünschte Information zur Verfügung. Die Anfrage des ersten Teilnehmers 1 umfasst mindestens ein Abfragemerkmal einer oder mehrerer Personen oder Organisationen und die Information besteht im Wesentlichen in der Auskunft, ob das Abfragemerkmal einem Identifikationsmerkmal 18 zuzuordnen ist. Die Information besteht also darin, ob eine Zustellung von Dokumenten an einen bestimmten Empfänger über das Zustellungssystem 10 möglich ist.

Die Zustellung eines Dokuments wird nachfolgend beschrieben. Der erste Teilnehmer 1 stellt eine erste Teilnehmerverbindung 110 zu der Eingangsschnittstelle 12 her und übergibt eines oder mehrere Dokumente. Der erste Teilnehmer 1 muss nicht selbst bei dem Zustellungssystem angemeldet sein, das heißt, es muss nicht notwendigerweise ein ldentifikationsdatensatz 17 zu dem ersten Teilnehmer 1 bestehen. Die Übergabe des Dokuments erfolgt vorzugsweise in elektronischer Form über ein Netzwerk. Das Dokument ist an den Teilnehmer 2 adressiert, das heißt, es weist mindestens das erste Identifikationsmerkmal 19 auf, sodass das Dokument durch ein Zuordnungsmittel 16 einem der Identifikationsdatensätze 17 zugeordnet werden kann, was durch die internen Verbindungen 111 dargestellt ist. Das Zuordnungsmittel 16 ist in der Regel Teil des nicht dargestellten Zentralrechnersystems. Über die Ausgangsschnittstelle 13 ist das Dokument an den zweiten Teilnehmer 2 zustellbar. In der Regel ist das Dokument an einem Speicherort (nicht dargestellt) zur Abholung durch den zweiten Teilnehmer hinterlegt. Bevorzugt ist das Dokument in elektronischer Form gespeichert und wird zum Abruf für den zweiten Teilnehmer 2 über die zweite Teilnehmerverbindung 120, beispielsweise über ein Netzwerk, bereitgehalten.

Die Schnittstelle 14 ist zur Legitimationsprüfung vorgesehen, um einen unbefugten Zugriff auf das für den zweiten Teilnehmer 2 hinterlegte Dokument zu verhindern. Sobald der zweite Teilnehmer 2 die zweite Teilnehmerverbindung 120 zu der Ausgangsschnittstelle 13 hergestellt hat, wird von der Legitimationsprüfung 14 über die interne Verbindung 140 das in dem Identifikationsmerkmal 19 referenzierte Bankkonto 20 des zweiten Teilnehmers 2 abgefragt und eine Verbindung 130 zu dem Bankkonto 20 des zweiten Teilnehmers 2 hergestellt. Der erfolgreiche Zugriff des zweiten Teilnehmers 2 auf das Bankkonto 20 über die Legitimationsprüfung 14, berechtigt den zweiten Teilnehmer 2 gleichzeitig zum Abruf der mit dem Bankkonto 20 referenzierten Dokumente. Der Zugriff auf das Bankkonto 20 erfolgt nach einem beliebigen Anmeldeverfahren für das electronic Banking. Das Zustellungssystem 10 ist von den verwendeten Verfahren, wie beispielsweise PIN, PIN/TAN oder HBCI unabhängig.

## Patentansprüche

1. Zustellungssystem (10) für die Zustellung von Dokumenten von einem ersten Teilnehmer (1) an einen zweiten Teilnehmer (2), **dadurch gekennzeichnet, dass** das Zustellungssystem aufweist:
- eine Datenbank (15), in welcher eine Mehrzahl von Identifikationsdatensätzen (17) abgelegt ist, wobei jeder Identifikationsdatensatz mindestens ein Identifikationsmerkmal (18) umfasst,
- eine Eingangsschnittstelle (12), welche für die Annahme (110) der Dokumente von dem ersten Teilnehmer (1) vorgesehen ist, wobei jedem Dokument mindestens ein erstes ldentifikationsmerkmal (18) zugeordnet ist, welches den zweiten Teilnehmer (2) als Adressaten identifiziert,
- ein Zuordnungsmittel (16), welches den Dokumenten gegebenenfalls mindestens ein zweites Identifikationsmerkmal (19) des zweiten Teilnehmers (2) zuordnet und
- eine Ausgangsschnittstelle (13), über welche die Dokumente dem zweiten Teilnehmer (2) zustellbar sind (120).

2. Zustellungssystem nach Anspruch 1, **dadurch gekennzeichnet, dass** die Ausgangsschnittstelle (13) einen Speicherort aufweist, wobei die Dokumente an dem Speicherort zur Abholung durch den zweiten Teilnehmer (2) bereitstellbar sind.

3. Zustellungssystem nach Anspruch 2, **dadurch gekennzeichnet, dass** der Speicherort durch eine Legitimationsprüfung (14) gegen unbefugten Zugriff geschützt ist.

4. Zustellungssystem nach Anspruch 3, **dadurch gekennzeichnet, dass** eine Verbindung (130) zwischen der Legitimationsprüfung (14) und einem elektronisch verwaltbaren Bankkonto (20) des zweiten Teilnehmers (2) über ein elektronisches Netzwerk herstellbar ist.

5. Zustellungssystem nach einem der Ansprüche 3 oder 4, **dadurch gekennzeichnet, dass** mittels Verfahren zur Legitimation für elektronische Bankgeschäfte ein Zugang der Legitimationsprüfung (14) auf das Bankkonto (20) herstellbar ist.

6. Zustellungssystem nach einem der vorhergehenden Ansprüche, **dadurch gekennzeichnet, dass** das zweite Identifikationsmerkmal (19) ein elektronisch verwaltbares Bankkonto (20) des zweiten Teilnehmers (2) identifiziert.

7. Zustellungssystem nach einem der vorhergehenden Ansprüche, **dadurch gekennzeichnet, dass** eine erste Teilnehmerverbindung (110) zwischen dem ersten Teilnehmer (1) und der Eingangsschnittstelle (12) über ein elektronisches Netzwerk herstellbar ist und/oder dass eine zweite Teilnehmerverbindung (120) zwischen dem zweiten Teilnehmer (2) und der Ausgangsschnittstelle (13) über ein elektronisches Netzwerk herstellbar ist, wobei die Dokumente über die erste Teilnehmerverbindung (110) und/oder über die zweite Teilnehmerverbindung (120) zustellbar sind.

8. Zustellungssystem nach einem der vorhergehenden Ansprüche, **dadurch gekennzeichnet, dass** das Zustellungssystem (10) eine Informationsschnittstelle (11) aufweist, über welche abfragbar ist (100), ob ein Dokument über das Zustellungssystem zustellbar ist.

9. Zustellungssystem nach einem der vorhergehenden Ansprüche, **dadurch gekennzeichnet, dass** über eine Informationsschnittstelle (11) eine Mehrzahl von Identifikationsmerkmalen eingebbar ist, und dass zu jedem Identifikationsmerkmal eine Information abrufbar ist, ob ein Teilnehmer mittels des Identifikationsmerkmals in der Datenbank (15) identifizierbar ist.

10. Verfahren zur Zustellung von Dokumenten mittels eines Zustellsystems (10), insbesondere nach einem der vorhergehenden Ansprüche, **dadurch gekennzeichnet dass**
- eine Datenbank (15) bereitgestellt wird, in welcher eine Mehrzahl von ldentifikationsdatensätzen (17) verwaltet wird, wobei jeder Identifikationsdatensatz mindestens ein erstes Identifikationsmerkmal (18) umfasst;
- wobei mindestens ein Dokument von einem ersten Teilnehmer (1) empfangen wird (110), welches zur Zustellung an einen zweiten Teilnehmer (2) vorgesehen ist;
- wobei der zweite Teilnehmer (2) anhand des ersten Identifikationsmerkmals (18), welches dem mindestens einen Dokument zugeordnet ist, als Adressat identifiziert wird;
- wobei dem mindestens einen Dokument gegebenenfalls mindestens ein weiteres Identifikationsmerkmals (19) des zweiten Teilnehmers (2) zugeordnet wird;
- und wobei das mindestens eine Dokument dem zweiten Teilnehmer (2) zur Abholung bereitgestellt wird, insbesondere zum Abruf über ein elektronisches Netzwerk.

11. Verfahren nach Anspruch 10, **dadurch gekennzeichnet, dass** die Legitimation des zweiten Teilnehmers (2) geprüft wird.

12. Verfahren nach Anspruch 11, **dadurch gekennzeichnet, dass** die Prüfung der Legitimation folgende Schritte umfasst:
- Herstellen einer Verbindung (130) zu einem elektronisch verwaltbaren Bankkontos (20) des zweiten Teilnehmers (2);
- Zugriff auf das Bankkonto (20) des zweiten Teilnehmers (2) mittels Verfahren zur Legitimation für elektronische Bankgeschäfte.

13. Verfahren nach Anspruch 12, **dadurch gekennzeichnet, dass** das mindestens eine Dokument dem zweiten Teilnehmer (2) nur dann zugänglich gemacht wird, wenn der Zugriff auf das Bankkonto (20) erfolgreich ist.
